# EUROPÄISCHE PATENTANMELDUNG

(11) **EP 1 474 989 A1**
(43) Veröffentlichungstag der Anmeldung: **10.11.2004**
(21) Anmeldenummer: 04010321.0
(22) Anmeldetag: 30.04.2004
(51) Int. Cl.: A22C 13/00, B65B 9/00

(54) **Verfahren zum Herstellen von Portionspackungen in einem Folienschlauch**

(30) Priorität: 03.05.2003 DE 10319820
(71) Anmelder: Poly-clip System GmbH & Co. KG, 60489 Frankfurt am Main (DE)
(72) Erfinder: Hanten, Jürgen, 61231 Bad Nauheim (DE)
(74) Vertreter: Eisenführ, Speiser & Partner

(57) **Zusammenfassung**

Bei einem Verfahren zum Herstellen von Portionspackungen aus zähflüssigem bis pastösem Füllgut wie Wurstbrät, Fett, Kitt u. dgl. in einem Folienschlauch (12), der vor dem Einbringen des Fullgutes (10) durch Verschweißen bzw. Versiegeln der Längsränder eines von einem Vorrat abgezogenen und in Schlauchform gebogenen Folienbandes (1) gebildet wird, und in den diskontinuierlich Füllgutportionen unter Druck eingebracht werden, worauf der Folienschlauch (12) unter Zopfbildung verschlossen wird, wird der Folienschlauch (12) unmittelbar durch den Fülldruck aus der Schweiß- bzw. Siegelstation zur Füllstation hin abgezogen und Folienband (1) vom Vorrat in die Schweiß- bzw. Siegelstation nachgezogen.

## Beschreibung

Die Erfindung betrifft ein Verfahren zum Herstellen von Portionspackungen aus zähflüssigem bis pastösem Füllgut wie Wurstbrät, Fett, Kitt u. dgl. in einem Folienschlauch, der vor dem Einbringen des Füllgutes durch Verschweißen bzw. Versiegeln der Längsränder eines von einem Vorrat abgezogenen und in Schlauchform gebogenen Folienbandes gebildet wird, und in den diskontinuierlich Füllgutportionen unter Druck eingebracht werden, worauf der Folienschlauch unter Zopfbildung verschlossen wird.

Es ist bekannt, die für die Herstellung von Würsten oder ähnlichen Portionspackungen benötigte Schlauchhülle in situ durch Längsnahtverschweißen oder -versiegeln eines in die Schlauchform gebogenen Folienbandes kontinuierlich herzustellen. Bei dem aus der EP 0 908 103 A1 bekannten, gattungsbildenden Verfahren wird das Folienband von Vorschubantrieben über eine Formschulter durch die Schweiß- oder Siegelstation gezogen, wobei die Formschulter das das Füllgut führende Füllrohr konzentrisch umgibt und sowohl die Schweiß- bzw. Siegelvorrichtung als auch die Vorschubantriebe gegen das Füllrohr arbeiten. Der auf diese Weise gebildete Folienschlauch wird von den Vorschubantrieben in eine Pufferstation gefördert, in der er sich harmonikaartig faltet. Auf der anderen Seite der Pufferstation wird er aus dieser beim Füllen einer Portion in den einseitig verschlossenen Folienschlauch durch eine an der Mündung des Füllrohrs angeordnete Darmbremse hindurch abgezogen, bis der betreffende Füllvorgang beendet ist und die Portion verschlossen werden kann.

Dieser Verfahrensablauf ist apparativ und steuerungstechnisch aufwendig, weil das Verschließen des Folienschlauches und der Füllvorgang unabhängig voneinander überwacht und gesteuert werden müssen. Denn durch Änderung der Füllgeschwindigkeit, der Portionsgröße u. dgl. ist der Bedarf an Folienschlauch in der Zeiteinheit in relativ weiten Grenzen schwankend; eine Anpassung der kontinuierlichen Herstellgeschwindigkeit des Folienschlauches ist jedoch aus mehreren Gründen nicht möglich oder sehr aufwendig.

Dem will die Erfindung abhelfen. Sie besteht darin, dass der Folienschlauch unmittelbar durch den Fülldruck aus der Schweiß- bzw. Siegelstation zur Füllstation hin abgezogen und Folienband vom Vorrat in die Schweiß- bzw. Siegelstation nachgezogen wird. Auf diese Weise wird automatisch immer nur soviel Folienschlauch hergestellt, wie beim Füllvorgang verbraucht wird. Dabei wird die kontinuierliche Herstellung des Folienschlauches zugunsten einer diskontinuierlichen aufgegeben, jedoch sind die Stillstandszeiten während der Verschließvorgänge im allgemeinen so kurz (typischerweise deutlich unter einer Sekunde), dass eine Überhitzung des sich in der Schweiß- bzw. Siegelstation befindlichen Folienmaterials nicht zu befürchten ist. Darüber hinaus bedarf es weder der gesonderten Vorschubantriebe für das Abziehen des verschlossenen Schlauches aus der Schweiß- bzw. Siegelstation und das Nachziehen von Folienband aus dem Vorrat. Ferner entfällt der Puffervorrat, dessen Bildung und dessen Abbau auch häufig mit Problemen behaftet war.

Demzufolge kann vorgesehen werden, dass das Verschweißen bzw. Versiegeln der Längsränder des Folienbandes bei dessen Durchlauf durch die Schweiß- bzw. Siegelstation während des Einbringens von Füllgut in den Folienschlauch erfolgt, wobei die Längsränder insbesondere mittels eines auf ihnen gleitenden Heizschuhs oder durch die beaufschlagende Heißluft verbunden werden. Ferner ist möglich, dass die Längsränder durch ein beheiztes, endlos umlaufendes und von den Folienrändern durch Reibschluss mitgenommenes (angetriebenes) Band verbunden werden.

Es kann jedoch auch so verfahren werden, dass das Verschweißen bzw. Versiegeln der Längsränder des Folienbandes über eine mindestens der Portionspackungslänge entsprechende Folienbandlänge nur im Stillstand des Schlauch- und Bandvorschubs während des stationären Verschließens der Portionspackung im Anschluss an deren Füllung erfolgt, wobei vorteilhaft ein bezüglich des Folienbandvorschubs stationärer, aber senkrecht dazu beweglicher Schweiß- oder Siegelbalken während des Verschließens einer gefüllten Packung gegen die Längsränder des zum Schlauch geformten Folienbandes gepresst und spätestens bei Füllbeginn der nächsten Packung wieder abgehoben wird. Das ruhende Verschweißen oder Versiegeln von Folien war zwar beim Verschließen von Beuteln bekannt, nicht jedoch bei der Herstellung eines durchgehenden Folienschlauches.

Gegenstand der Erfindung ist ferner eine Vorrichtung zur Ausführung des erfindungsgemäßen Verfahrens, mit einem an eine Füllmaschine angeschlossenen Füllrohr, eine diese konzentrisch umgebende Formschulter zur Formung eines von einer Vorratsrolle abgezogenen Folienschlauches in die Schlauchform, einer die benachbarten Längsränder des Folienschlauches auf dem Füllrohr miteinander verbindenden Schweiß- oder Siegeleinrichtung, und mit einer in Ausstoßrichtung hinter der Mündung des Füllrohres angeordnete Abschnür- und Verschließvorrichtung für den Folienschlauch hinter jeder fertig gefüllten Packung, bei der die Schweiß- oder Siegeleinrichtung einen radial zum Füllrohr beweglichen Schweiß- oder Siegelbalken von einer der Gesamtlänge von Packung und Verschlussabschnitt entsprechenden Mindestlänge aufweist. Alternativ kommen ein ortsfester, auf die Längsränder der Flachfolie gleitend auflegbarer Heizschuh, eine ortsfeste, gegen die Längsränder der Flachfolie richtbare Heißluftquelle oder ein zwischen zwei Umlenkrollen frei umlaufenden, mit seinem einen Trum an die Längsränder der Flachfolie anlegbares Heizband in Frage.

Die Zeichnung veranschaulicht die Erfindung an schematisch dargestellten Ausführungsbeispielen der beteiligten Elemente einer Abfüllvorrichtung; es zeigt
- Figur 1: die Vorrichtung mit einem abhebbaren Schweiß- oder Siegelbalken;
- Figur 2: die Vorrichtung mit einem ortsfest gleitend an der Folie anliegenden Heizschuh; und
- Figur 3: die Vorrichtung mit einem umlaufenden Heizband.

In allen Fällen wird Folienband 1 von einem Vorrat in Form einer Rolle 2 abgezogen und über Umlenkwalzen 3 sowie eine Spannwalze 4 einer Formschulter 5 zugeführt, mit deren Hilfe das Folienband 1 konzentrisch zu einem Füllrohr 6 in die Schlauchform gebogen wird. Die zusammengeführten Längskanten des Folienbandes 1 werden zur Naht 8 verschweißt oder versiegelt. Der Balken 7 ist in nicht dargestellter Weise beheizt und wird für den Verschlussvorgang gegen die Längsränder des Folienbandes 1 gepresst.

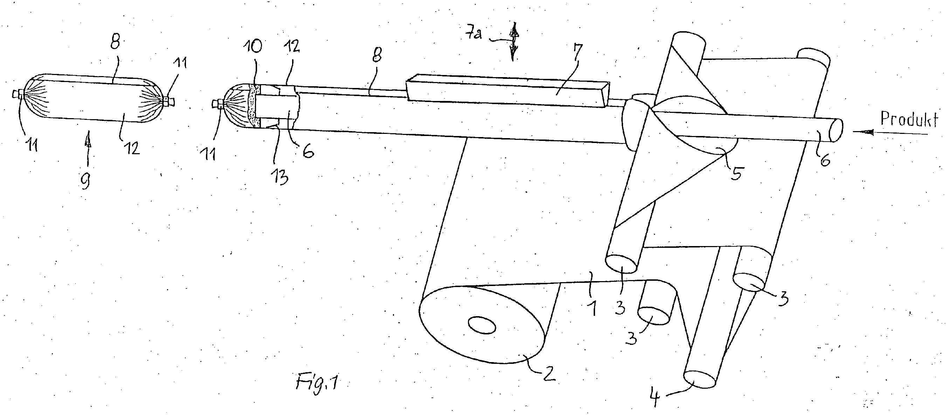

Letzteres geschieht beim Verschließen (und ggf. Abtrennen) einer fertigen Packung 9; dieser Vorgang ist in Figur 1 der EP 0 908 103 A1 dargestellt, während die hier beigefügten Zeichnungen das Füllen der nächsten Portionspackung zeigen. Aus der Mündung des Füllrohres 6 wird Füllgut 10 in den mit dem Clip 11 einseitig verschlossenen Folienschlauch 12 gedrückt. Dadurch wird Folienschlauch 12 über eine (hier innenliegende) Darmbremse 13 nachgezogen, aber nicht mehr, als für die jeweils gefüllte und verschlossene Packung gebraucht wird. Sobald die - ggf. vorher in der nicht dargestellten Füllmaschine abgemessene - Füllgut-Portion ausgestoßen ist, wird der Füllvorgang - ggf. sehr kurz - angehalten und der Verschließvorgang findet statt. In dieser Zeit kann ggf. in der Füllmaschine die nächste abzufüllende Portion abgemessen und vorbereitet werden.

Bei der in Figur 1 schematisch dargestellten Vorrichtung besteht die Schweiß- bzw. Siegelstation im Wesentlichen aus einem beheizten Siegelbalken 7, der - wie der Pfeil 7a verdeutlicht - von seiner Anlage an den zusammengeführten Längsrändern des Folienbandes 1 abgehoben werden kann. Im Betrieb wird die auf das Füllrohr 6 bezogene Radialbewegung des Siegelbalkens 7 derart gesteuert, dass er immer dann an die Längsränder des Folienbandes angepresst ist, wenn Folienschlauch 12 während des Füllens einer Packung 9 vom Füllrohr 6 abgezogen und deshalb Folienband 1 von der Vorratsrolle 2 nachgezogen wird, während der Siegelbalken 7 abgehoben wird, wenn ein Füllvorgang beendet und der Folienschlauch 12 zwischen zwei aufeinanderfolgenden Packungen 9 zwecks Verschließens mit Clips 11 zu einem Zopf eingeschnürt worden ist. Die Länge des Siegelbalkens 7 entspricht mindestens der Länge des für eine Packung 9 und seine verschlossenen Enden benötigten Länge an Folienschlauch 12.

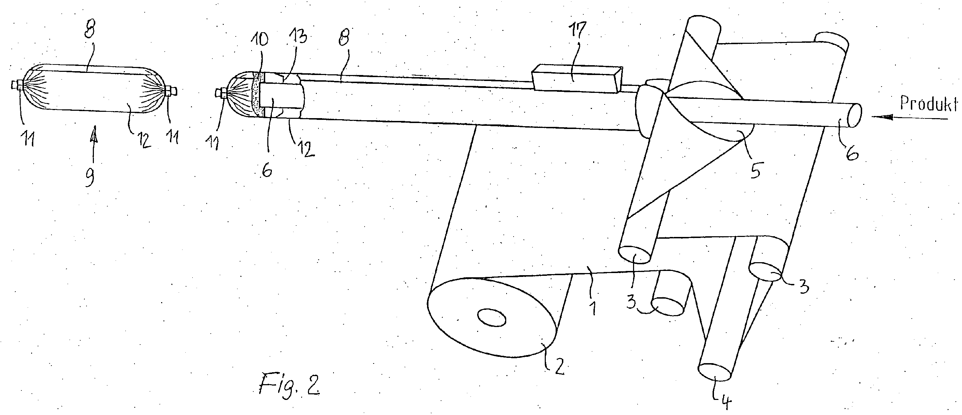

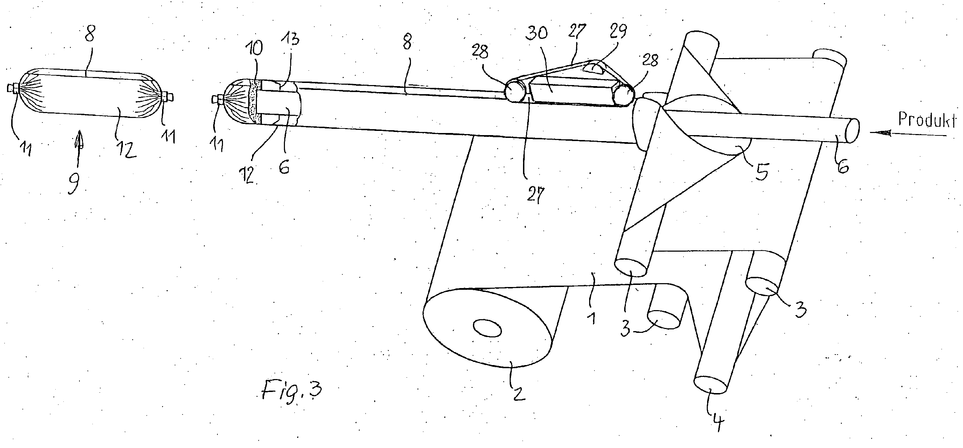

Der beim Ausführungsbeispiel der erfindungsgemäßen Vorrichtung gemäß Figur 2 die Schweiß- bzw. Siegelstation bildende Heizschuh 17 entspricht in seiner Konstruktion weitgehend dem Heizbalken 7 der ersten Ausführungsform, ist jedoch deutlich kürzer als dieser und ortsfest angeordnet, jedoch derart gegenüber den Längsrändern der Folienbandes 1 und dem Füllrohr 2 einstellbar, dass er gleitend auf dem Folienmaterial aufliegt. Jedenfalls bei einem mit hoher Frequenz laufenden Abfüllvorgang (z. B. 400/min) besteht nicht die Gefahr, dass wegen der sehr kurzzeitigen Verschließvorgänge eine Überhitzung dort stattfindet, wo sich der Heizschuh 17 während der Stillstandszeit befindet. Der Heizschuh 17 kann auch die Form einer Heißluft-Ausblasdüse haben, welche Heißluft unter Druck gegen die zu verschießenden Längsränder des Folienbandes 1 richtet.

Beim Ausführungsbeispiel der Figur 3 besteht die Schweiß- bzw. Siegelvorrichtung im Wesentlichen aus einem über Umlenkrollen 28 und einer Spannvorrichtung 29 geführten Heizband 27, welches von der Heizvorrichtung 30 erwärmt und durch Reibung vom Material des Folienbandes 1 mitgenommen wird, wenn daraus gebildeter Folienschlauch 12 beim Abfüllen der Packungen 9 vom Füllrohr 2 abgezogen wird.

## Patentansprüche

1. Verfahren zum Herstellen von Portionspackungen aus zähflüssigem bis pastösem Füllgut wie Wurstbrät, Fett, Kitt u. dgl. in einem Folienschlauch (12), der vor dem Einbringen des Füllgutes (10) durch Verschweißen bzw. Versiegeln der Längsränder eines von einem Vorrat abgezogenen und in Schlauchform gebogenen Folienbandes (1) gebildet wird, und in den diskontinuierlich Füllgutportionen unter Druck eingebracht werden, worauf der Folienschlauch (12) unter Zopfbildung verschlossen wird,
**dadurch gekennzeichnet, dass** der Folienschlauch (12) unmittelbar durch den Fülldruck aus der Schweiß- bzw. Siegelstation zur Füllstation hin abgezogen und Folienband (1) vom Vorrat in die Schweiß- bzw. Siegelstation nachgezogen wird.

2. Verfahren nach Anspruch 1,
**dadurch gekennzeichnet, dass** das Verschweißen bzw. Versiegeln der Längsränder des Folienbandes (1) über eine mindestens der Portionspackungslänge entsprechende Folienbandlänge nur im Stillstand des Schlauch- und Bandvorschubs während des stationären Verschließens der Portionspackung (9) im Anschluss an deren Füllung erfolgt.

3. Verfahren nach Anspruch 2,
**dadurch gekennzeichnet, dass** ein bezüglich des Folienbandvorschubs stationärer, aber senkrecht dazu beweglicher Schweiß- oder Siegelbalken während des Verschließens einer gefüllten Packung (9) gegen die Längsränder des zum Schlauch geformten Folienbandes (1) gepresst und spätestens bei Füllbeginn der nächsten Packung (9) wieder abgehoben wird.

4. Verfahren nach Anspruch 1,
**dadurch gekennzeichnet, dass** das Verschweißen bzw. Versiegeln der Längsränder des Folienbandes (1) bei dessen Durchlauf durch die Schweiß- bzw. Siegelstation während des Einbringens von Füllgut (10) in den Folienschlauch (12) erfolgt.

5. Verfahren nach Anspruch 4,
**dadurch gekennzeichnet, dass** die Längsränder mittels eines auf ihnen gleitenden ortsfesten Heizschuhs (17) verbunden werden.

6. Verfahren nach Anspruch 4,
**dadurch gekennzeichnet, dass** die Längsränder durch sie beaufschlagende Heißluft verbunden werden.

7. Verfahren nach Anspruch 4,
**dadurch gekennzeichnet, dass** die Längsränder durch ein beheiztes, endlos umlaufendes und von den Folienrändern durch Reibschluss mitgenommenes (angetriebenes) Band verbunden werden.

8. Vorrichtung zur Ausführung des Verfahrens nach Anspruch 2 oder 3, mit einem an eine Füllmaschine angeschlossenen Füllrohr (6), eine diese konzentrisch umgebende Formschulter (5) zur Formung eines von einer Vorratsrolle (2) abgezogenen Folienschlauches (12) in die Schlauchform, einer die benachbarten Längsränder des Folienschlauches (12) auf dem Füllrohr (6) miteinander verbindenden Schweiß- oder Siegeleinrichtung, und mit einer in Ausstoßrichtung hinter der Mündung des Füllrohres (6) angeordnete Abschnür- und Verschließvorrichtung für den Folienschlauch (12) hinter jeder fertig gefüllten Packung (9),
**dadurch gekennzeichnet, dass** die Schweiß- oder Siegeleinrichtung einen radial zum Füllrohr (6) beweglichen Schweiß- oder Siegelbalken (7) von einer der Gesamtlänge von Packung (9) und Verschlussabschnitt entsprechenden Mindestlänge aufweist.

9. Vorrichtung zur Ausführung des Verfahrens nach Anspruch 4 und 5, mit einem an eine Füllmaschine angeschlossenen Füllrohr (6), eine diese konzentrisch umgebende Formschulter (5) zur Formung eines von einer Vorratsrolle (2) abgezogenen Folienschlauches (12) in die Schlauchform, einer die benachbarten Längsränder des Folienschlauches (12) auf dem Füllrohr (6) miteinander verbindenden Schweiß- oder Siegeleinrichtung, und mit einer in Ausstoßrichtung hinter der Mündung des Füllrohres (6) angeordnete Abschnür- und Verschließvorrichtung für den Folienschlauch (12) hinter jeder fertig gefüllten Packung (9),
**dadurch gekennzeichnet, dass** die Schweiß- oder Siegeleinrichtung einen ortsfesten, auf die Längsränder der Flachfolie einstellbar gleitend auflegbaren Heizschuh (17) aufweist.

10. Vorrichtung zur Ausführung des Verfahrens nach Anspruch 4 und 6, mit einem an eine Füllmaschine angeschlossenen Füllrohr (6), eine diese konzentnsch umgebende Formschulter (5) zur Formung eines von einer Vorratsrolle (2) abgezogenen Folienschlauches (12) in die Schlauchform, einer die benachbarten Längsränder des Folienschlauches (12) auf dem Füllrohr (6) miteinander verbindenden Schweiß- oder Siegeleinrichtung, und mit einer in Ausstoßrichtung hinter der Mündung des Füllrohres (6) angeordnete Abschnür- und Verschließvorrichtung für den Folienschlauch (12) hinter jeder fertig gefüllten Packung (9),
**dadurch gekennzeichnet, dass** die Schweiß- oder Siegelstation eine ortsfeste, gegen die Längsränder der Flachfolie richtbare Heißluftquelle aufweist.

11. Vorrichtung zur Ausführung des Verfahrens nach Anspruch 4 und 7, mit einem an eine Füllmaschine angeschlossenen Füllrohr (6), eine diese konzentrisch umgebende Formschulter (5) zur Formung eines von einer Vorratsrolle (2) abgezogenen Folienschlauches (12) in die Schlauchform, einer die benachbarten Längsränder des Folienschlauches (12) auf dem Füllrohr (6) miteinander verbindenden Schweiß- oder Siegeleinrichtung, und mit einer in Ausstoßrichtung hinter der Mündung des Füllrohres (6) angeordnete Abschnür- und Verschließvorrichtung für den Folienschlauch (12) hinter jeder fertig gefüllten Packung (9),
**dadurch gekennzeichnet, dass** die Schweiß- oder Siegelstation ein zwischen zwei Umlenkrollen (28) frei umlaufendes, mit seinem einen Trum an die Längsränder der Flachfolie (1) anlegbares Heizband (27) aufweist.
